# EUROPEAN PATENT SPECIFICATION

(11) **EP 1 343 369 B1**
(45) Date of publication and mention of the grant of the patent: **08.12.2004**
(21) Application number: 01271146.1
(22) Date of filing: 20.12.2001
(51) Int. Cl.: A01N 1/02, C12N 5/00

(54) **PRESERVATION OF CELLS**
KONSERVIERUNG VON ZELLEN
CONSERVATION DE CELLULES

(30) Priority: 20.12.2000 GB 0031065
(43) Date of publication of application: 17.09.2003
(73) Proprietor: University College Cardiff Consultans Ltd., Cardiff CF24 0DE (GB)
(72) Inventor: GRIFFITHS, Benjamin John, Nathan, Carmarthen, Carmarthenshire SA32 8NW (GB); EVANS, Peter John, Cyncoed, Cardiff CF23 6PS (GB)
(74) Representative: Tombling, Adrian George
(86) International application number: PCT/GB2001/005688
(87) International publication number: WO 2002/049428

(56) References cited:
- WO-A-90/06053
- WO-A-94/00567
- US-A- 5 635 344
- DATABASE WPI Section Ch, Week 199549 Derwent Publications Ltd., London, GB; Class B04, AN 1995-378531 XP002190799 & JP 07 255469 A (KURABO IND LTD), 9 October 1995 (1995-10-09)
- P. J. EVANS: "Hypothermic preservation of hepatocytes on gelatin gels." CELL BIOLOGY INT., vol. 18, no. 11, 1994, pages 999-1008, XP002190794 cited in the application
- B. J. NATHAN GRIFFITHS & P. J. EVANS: "Ultrastructural changes in hypothermically preserved hepatocytes" CRYOBIOLOGY, vol. 40, 2000, pages 176-181, XP002190795 cited in the application
- P. STEFANOVICH, R.M. EZZELL, S.J. SHEEHAN, R.G. TOMPKINS, M.L. YARMUSH & M. TONER: "Effects of hypothermia on the function, membrane integrity and cytoskeletal structure of hepatocytes" CRYOBIOLOGY, vol. 32, 1995, pages 389-403, XP002190796
- DATABASE WPI Section Ch, Week 199207 Derwent Publications Ltd., London, GB; Class B04, AN 1992-055192 XP002190800 & SU 1 635 997 A (MOSC MED INST), 23 March 1991 (1991-03-23)
- A.L. BUSZA, B.J. FULLER & E. PROCTOR: "Evaluation of cold reperfusion as an indicator of viability in stored organs: a 31P-NMR study in rat liver" CRYOBIOLOGY, vol. 31, 1994, pages 26-30, XP002190797
- DATABASE CAPLUS [Online] CHEMICAL ABSTRACTS SERVICE, COLUMBUS, OHIO, US; Access Nr.: 1977:447980; Doc. Nr.: 87:47980, D.E.PEGG, I.A.JACOBSEN & C.A. WALTER: "Hypothermic perfusion of rabbit kidneys with solutions containing gelatin polypeptides" XP002190798 & PEGG, JACOBSEN & WALTER: "Hypothermic perfusion of rabbit kidneys with solutions containing gelatin polypeptides" TRANSPLANTATION, vol. 24, no. 1, 1977, pages 29-38,

## Description

The present invention relates to methods for preserving cells, in particular primary cells, such as hepatocytes. The present invention also relates to a gel containing hydrolysed gelatin.

The introduction of whole organ collagenase perfusion techniques (Krebs *et al.,* Regulation of Hepatic Metabolism, 726-75, 1974: and Seglen, Meth. Cell Biol., 13, 29-83, 1976) has lead to the widespread isolation of viable hepatocytes. The isolation methods used are mild with the result that the cells initially retain in *vivo* like properties *in vitro.* However, high cell yields are obtained from a single liver and generally the number of cells produced greatly exceeds the experimental requirements.

Isolated hepatocytes are a better approximation to the in vivo situation than established cell lines or hepatoma cells (Sirica and Pitot, Pharmacol. Rev., 31, 205-227, 1980) but they have the disadvantage of a limited viability in suspension culture.

Hepatocytes have many features which make them a particularly suitable in vitro model system. They have a high rate of metabolism and are the major cell type involved in detoxification. However, in culture the cells divide poorly, if at all, and undergo phenotypic changes whereby many of their liver specific processes are lost. The cells are generally used immediately after isolation and sustained viability is dependent upon the formation of a monolayer. Maintenance of large numbers of plates is labour intensive as the medium needs to be changed every 24 hours.

A further complication during hepatocyte culture is their limited life span and the occurrence of phenotypic changes (Bissell, Ann. N.Y Acad. Sci., 349. 85-98, 1980). These changes make results obtained using long-term cultures no more applicable to the intact organ than those obtained with established cell lines:

The hypothermic preservation of hepatocytes on gelatin gels has been disclosed (Evans, Cell Biology International, 18, 999-1008, 1994; Evans, Cell Biology International, 19, 855-860, 1995; Evans, Cell Biology International, 23, 117-124, 1999; and Griffiths & Evans, Cryobiology, 40, 176-181, 2000). The method requires the preparation of gels made from a culture medium containing untreated (non-hydrolysed) gelatin and the attachment of hepatocytes to the gel surface. The hepatocytes are then overlaid with culture medium and cultured at a temperature of 10°C. Such preservation of hepatocytes on gelatin containing gels enables hepatocytes to be stored for at least 7 days without any substantive deterioration in the function of the cells. In order to detach the cells from the gel surface, it is necessary to melt the gel by heating it to 37°C. Heating the gel to 37°C may cause damage,to the cells. A further problem with this prior art method is that the culture medium overlying the attached cells needs to be changed. As the cells are attached to an exposed surface of the gel, the cells may be dislodged or damaged when the medium is changed. Furthermore, on transporting a culture dish, the culture medium can easily be spilled.

US-A-5,635,344 and US-A-5,736,397 disclose a method of preserving cells comprising culturing the cells at a temperature of between 0 and 5°C, wherein the cells are in a gel comprising non-hydrolysed gelatin. Culturing cells between layers of non-hydrolysed gelatin in not disclosed.The present invention overcomes at least some of the problems associated with the prior art methods for preserving cells.

The present invention provides a method for preserving isolated cells comprising attaching the cells to a gel comprising hydrolysed gelatin and culturing the cells at a temperature of between 0°C and 5°C.

The use of hydrolysed gelatin produces a gel which is strong enough to act as a support to which cells can be attached, but weak enough to be dispersed by the addition of an aqueous solution such as excess cold culture medium. Rimming (i.e. use of a needle or similar device to facilitate separation of gel from its container) can also be used to assist with the dispersion.

The use of hydrolysed gelatin in the gel therefore avoids the need to heat the gel to 37°C in order to detach the cells and avoids any damage to the cells caused by such heating. A distinction can also be made between hypothermic damage and damage caused by heating to 37°C by using the gel comprising hydrolysed gelatin.

Furthermore, by using hydrolysed gelatin in a gel, the attachment of cells to a solid support (i.e. a standard tissue culture treated plastic support such as a culture dish or well, e.g. Primaria® and Corning) is inhibited provided the gel does not contain serum. The solid supports have been treated so that they have a net charge on their surface in order to aid in the attachment of cells to the support. It has been found that the hydrolysis of gelatin results in the loss of factors which encourage cells to attach to a solid support and/or generates factors that inhibit cell attachment. Accordingly, the method of the present invention enables one skilled in the art to prevent the attachment of cells to a solid support and thereby enables easier harvesting of the cultured cells and in particular facilitates the isolation of spheroids. Spheroids are cells that form a multicellular aggregate. The aggregate is usually spherical. The spheroids can reconstruct functional complexes and show tissue specific functions (see Hamamoto *et al.*, J. Biochem., 124, 972-979, 1998).

As the presence of hydrolysed gelatin inhibits the attachment of cells to solid supports when serum is not present, it allows one skilled in the art more time to recover cells without the complication of cell attachment to a solid support. The absence of serum assists in preventing cells attaching to a solid support. The absence of serum from the medium leads to a decrease of the period in which the cells can be preserved from about 7 days to 3 days. It is also preferred that the solid support does not have a coating of an extracellular matrix factor, such as collagen, fibronectin and matrigel. Such extracellular matrix factors help cells to attach to the solid support and should be avoided if the cells are not to be attached to the surface of the solid support.

Furthermore, by using hydrolysed gelatin in a gel, it has been found that the gel melts uniformly at about 37°C. On heating a gel containing hydrolysed gelatin, the gel melts more uniformly than a gel containing non-hydrolysed gelatin. The term "uniformly" as used herein means the centre of the gel melts at substantially the same rate as the edges of the gel. This uniform melting of the gel has the advantage that the all the cells can be isolated from the gel at substantially the same time.

The term "preserving" as used herein is defined as maintaining the viability and/or in *vivo*-like function of the cells. Viability can be judged by the retention of cytosolic marker enzymes such as lactate dehydrogenase (LDH) and by the maintenance of the cells' ability to subsequently attach to a solid support under non-inhibitory culture conditions. Retension of in *vivo*-like function can be judged by the cells maintaining rates of protein synthesis, by cells demonstrating in *vivo*-like responses to hormones, by cells maintaining the level of cytochrome P₄₅₀ and its specific isoenzymes, and by the absence of atypical enzyme characteristics or phenotypic changes. More than one of these methods can be used to determine in vivo-like cell function.

Preferably *in vivo*-like cell function is measured by determining that the levels of cytochrome P₄₅₀ are maintained. Methods for determining the viability and in *vivo*-like cell function of cells are disclosed in Evans, 1994 *(supra),* Evans, 1995 *(supra),* Griffiths and Evans, 2000 *(supra)* and Evans, 1999 *(supra).*

The term "attaching" as used herein refers to the cells being immobilised on a surface of the gel or immobilised within the gel.

The term "isolated cell" as used herein, refers to any cell except gelatinase producing bacteria. Preferably, the isolated cell is a eukaryotic cell such as a mammalian cell, a plant cell (including protoplasts), insect cells, etc. It is particularly preferred that the term refers to primary cells such as hepatocytes, kidney proximal tubule cells, mammary epithelial cells and primary pancreatic cells. The isolated cell may also be a genetically engineered cell containing one or more heterologous genes or modified genes. Preferably the isolated cell is a hepatocyte obtained following whole organ collagenase perfusion or an equivalent method. Methods for obtaining isolated hepatocytes are well known to those skilled in the art. In particular, suitable methods are disclosed in Evans (Biochim. Biophys. Acta, 677, 433-444, 1981) and Evans and Mayer (Biochim. Biophys. Res. Comm., 107, 51-58, 1982).

Methods for obtaining kidney proximal tubule cells are described in Evans (Biochem. Biophys. Acta, 1133, 255-260, 1992) and Evans (Biochem. Biophys. Acta, 1221. 243-249, 1994). It has been shown that on preserving kidney proximal tubule cells using the method of the present invention that in addition to maintaining the *in vivo* like enzyme profiles, the kidney proximal tubule cells divide normally when released from the gel. The conditions of preservation have no cystostatic effects.

The method of the present invention is therefore appropriate for both non-dividing and dividing cell types. Moreover, the kidney proximal tubule cells rely almost exclusively on aerobic respiration for their energy generation while the hepatocytes have a significant capacity for anaerobic respiration. The successful preservation of these primary cell type, which have very different characteristics show that the method of the present invention is applicable to a wide variety of cell types. The method of the present invention is a very valuable holding procedure for primary cells and is also appropriate for use with established cell lines. In particular, it obviates the need to "grow cells up" immediately prior to use. Experiments requiring confluent cell monolayers, e.g. Caco 2, cells, can therefore also be facilitated.

The term "culturing" as used herein refers to the maintenance and/or growth of cells.

Any gel containing hydrolysed gelatin can be used in the method of the present invention provided it is suitable for culturing the cells. The gel preferably comprises a cell culture medium and hydrolysed gelatin. The cell culture medium can be any cell culture medium capable of culturing the cells to be preserved. A suitable culture medium is Leibovitz (L-15) medium preferably buffered with Hepes in place of bicarbonate enabling it to be exposed to the atmosphere. Other suitable media include Waymouth's, Williams', Dulbecco's or Ham's medium which are buffered with bicarbonate and require a 95% air 5% CO₂ gas phase. Where necessary, the media can be supplemented. Suitable supplements include carbon sources such as glucose, growth hormones such as insulin, serum such as heat inactivated new born calf serum and antibiotics such as gentamicin. Preferably the gel comprises 1.5% (w/v) hydrolysed gelatin in Leibovitz (L-15) medium (pH 7.4) containing glucose (8.3 mM) and Hepes (25 mM).

The cell culture medium may in addition comprise a cytoprotectant, such as glutathione, to protect the cells against rewarming injury. Glutathione is known to enter cells at low temperatures.

Preferably, the method of the present invention comprises culturing the cells at a temperature of between 4 and 14°C, more preferably at a temperature of between 8 and 12°C, most preferably at a temperature of about 10°C.

The term "hydrolysed gelatin" as used herein means gelatin that has been at least partially hydrolysed to reduce its gel strength. Gelatin that has not been hydrolysed produces a relatively strong gel. When using hydrolysed gelatin, a weaker gel is formed that can be dispersed by the addition of an aqueous solution. The term "hydrolysed gelatin" as used herein, refers to gelatin which is hydrolysed to a degree such that it will produce a gel which is sufficiently strong to provide a solid support to which cells can be attached at a temperature of between 0 and 15°C, but which is sufficiently weak to be dispersed on addition of an aqueous solution. Preferably the hydrolysed gelatin is hydrolysed 300 bloom type A gelatin from porcine skin.

Gelatin can be hydrolysed by any known method including thermal hydrolysis, proteolytic digestion with gelatinase or trypsin, and chemical methods including acid and alkaline hydrolysis. Preferably the gelatin is hydrolysed by thermal hydrolysis. In particular, it is preferred that hydrolysed gelatin is produced by heating gelatin to a temperature of between 85 and 121°C for between 0.2 and 3 hours. More preferably, the gelatin is heated to a temperature between 90 and 100°C for 1 to 2.5 hours. Most preferably, the gelatin is hydrolysed by heating it to about 95°C for about 2 hours or by heating it to about 121°C for about 20 minutes.

The gel comprises sufficient hydrolysed gelatin to produce a gel that is sufficiently strong to produce a solid gel on, or in, which cells can be preserved at a temperature of between 0 and 15°C, but which is sufficiently weak to be dispersed on addition of an aqueous solution. Preferably, the gel comprises between 0.5% and 5.0% (w/v) of hydrolysed gelatin. It is further preferred that the gel comprises between 1% and 2% (w/v) hydrolysed gelatin, most preferably 1.5% (w/v)'gelatin.

The gel may in addition to the hydrolysed gelatin comprise non-hydrolysed gelatin, provided the gel formed is sufficiently weak to be dispersed by addition of an aqueous solution at a temperature of between 0 and 15°C.

In a preferred embodiment of the present invention, the cells are attached to a surface of the gel comprising hydrolysed gelatin and preferably covered with a liquid cell culture medium. Generally the liquid cell culture medium is identical to that used to form the gel except that it does not comprise gelatin or hydrolysed gelatin and may comprise supplements not present in the gel. It is particularly preferred that the liquid cell culture medium comprises a cytoprotectant, such as glutathione. In a further embodiment of the present invention, the cells are attached to a first layer of the gel comprising hydrolysed gelatin and then covered with a second layer of the hydrolysed gelatin gel so that the cells are held between the two layers of gel. In an alternative embodiment of the present invention the cells are mixed with the gel comprising hydrolysed gelatin before it solidifies (i.e. at a temperature of about 37°C). When the gel solidifies (i.e. at a temperature of about 10°C) the cells are immobilised with the gel. If necessary, a liquid cell culture medium can be added in order to prevent the gel drying out and to supply any required nutrients. By having the cells between two layers of the gel or immobilised within the gel, the cells are protected from damage during transport and it is also easier to change the liquid culture medium without disturbing the cells. On dispersing the gel, the cells may attach to the surface of the solid support, in which the gel is formed, provided the gel contains serum and/or the surface of the solid support is coated with an extracellular matrix factor. Alternatively, the cells may be prevented from attaching to the solid support by using a gel which does not contain serum and preferably by using a solid support that has not been coated with an extracellular matrix factor.

In a further preferred embodiment of the present invention, the cells can be attached directly to a solid support, such as culture dish or well and then covered with a layer of the gel comprising hydrolysed gelatin. The cells will then be covered by the gel. If necessary, the gel can then be covered with cell culture medium in order to'prevent the gel drying out and to supply any required nutrients. Again this protects the cells from damage during transport and on changing the cell culture medium. Furthermore, if it is desired to use the cells when they are attached to a surface, this method will enable the cells to be used directly after the gel has been dispersed without waiting for cell attachment. Preferably the surface of the solid support has a coating of an extracellular matrix factor. Furthermore, the hydrolysed gelatin gel layer can be covered with a non-hydrolysed gel layer. Preferably the non-hydrolysed gel layer is thin, i.e. approximately between 0.5 and 2mm thick. The top non-hydrolysed gelatin gel layer can act as a more robust top layer for protection during distribution. The term "non-hydrolysed gelatin" is defined below.

The method of the present invention can be performed using any suitable solid support for supporting the gel. Suitable solid supports include culture dishes, wells such as 96 well format plates and columns. For example, the method can be used to produce solid supports having cells affixed to their surface ready for use in standard screening or biochemical assay procedures well known to those skilled an the art as indicated above.

It is surprising that it is possible to cover the cells with the gel as it was known that cells can easily be damaged by shear forces. Shear forces are used to break open cells in a controlled manner by homogenation, sonification and nitrogen cavitation. The gelation of gelatin would have been expected to exert strong forces on cells in its vicinity and possibly to remove water from the cells. It was therefore surprising to find that on covering and immobilising cells within the gel that no cytotoxic effects occurred.

The present invention also provides a gel comprising hydrolysed gelatin for use in the method of the present invention. As indicated above, any culture medium can be used in combination with hydrolysed gelatin to form the gel of the present invention.

As indicated above, the gel of the present invention has the advantage of enabling the preservation of cells at temperatures of between 0 and 15°C wherein the cells can be detached from the gel by dispersing the gel on addition of an aqueous solution.

The present invention also provides a solid support having the gel of the present invention formed thereon.

The solid support can be any support on which the gel,can be formed. In particular, the solid support can be a culture dish, a well or a column. The solid support may have a coating of an extracellular matrix factor.

It is further preferred that cells are attached to the gel formed on the solid support of the present invention. As indicated above, the cells can be:
1. attached to a surface of the gel;
2. held between two layers of the gel;
3. immobilised within the gel; or
4. attached to the solid support and covered with the gel.

The present invention also provides a gel comprising hydrolysed gelatin and one or more isolated cells.

The present invention also provides a method for preserving isolated cells comprising attaching the cells to a first layer of a gel and then covering with a second layer of a gel so that the cells are held between the two layers of gel and culturing the cells at a temperature of between 0 and 15°C, wherein at least one of the layers of gel comprises non-hydrolysed gelatin.

The term "non-hydrolysed gelatin" refers to gelatin which has not been hydrolysed. Preferably the term "non-hydrolysed gelatin" means gelatin which has not been hydrolysed *in vitro.* It is further preferred that the gelatin has not been hydrolysed by thermal hydrolysis, proteolytic digestion with gelatinase or trypsin or chemical methods including acid or alkaline hydrolysis.

Preferably the gelatin is 300 bloom type A gelatin from porcine skin which has not been hydrolysed.

In a preferred embodiment, both layers of gel comprise non-hydrolysed gelatin.

In an alternative preferred embodiment, the first layer of gel comprises hydrolysed gelatin and the second layer comprises non-hydrolysed gelatin.

In a further preferred alternative embodiment, the first layer of gel comprises non-hydrolysed gelatin and the second layer comprises hydrolysed gelatin. When the cells are required, the second layer can be removed by aqueous dispersion, leaving the cells still attached to the first layer. Such immobilised cells are particularly suited for microinjection studies. Various substances (e.g. DNA, RNA and proteins) can be directly injected into the immobilised cells. In view of the low metabolism rate of the cells, the progressive microinjection of the immobilised cells will give essentially a uniform starting time for subsequent metabolic experiments.

The gel comprising the non-hydrolysed gelatin may in addition also comprise hydrolysed gelatin; however, preferably the gel comprising non-hydrolysed gelatin contains substantially no hydrolysed gelatin. Substantially no hydrolysed gelatin mean the gel does not contain more than the endogenous level of hydrolysed gelatin present in a non-hydrolysed gelatin sample. Preferably the level of hydrolysed gelatin is less than 10% (w/w) of the gelatin. Hydrolysed gelatin is considered to be gelatin protein that is soluble in trichloroacetic acid. Accordingly, it is preferred that non-hydrolysed gelatin contains less than 10% (w/w) tricloroacetic acid soluble protein. Preferably the gel comprising non-hydrolysed gelatin forms a strong gel on which cells can be preserved at a temperature of between 0 and 15° C, but which cannot be dispersed on addition of an aqueous solution. Suitable non-hydrolysed gelatin gels have been described previously (see Evans, Cell Biology International, 18, 999-1008, 1994; Evans, Cell Biology International, 19, 855-860, 1995; Evans, Cell Biology International, 23, 117-124, 1999; and Griffiths & Evans, Cryobiology, 40, 176-181, 2000). Furthermore, hydrolysed gelatin is generally found to comprise a 30kDa protein fragment whereas non-hydrolysed gelatin does not comprise a 30 kDa protein fragment (as detected by using SDS-PAGE).

The preferred features of the gelcomprising non-hydrolysed gelatin including the various components of the gel are the same as those indicated above for the gel comprising hydrolysed gelatin, except that the gel must comprise non-hydrolysed gelatin. The present invention also provides a solid support having a first layer of gelatin gel formed thereon and a second layer of gelatin formed on the first layer of gelatin gel, wherein cells are held between the two gelatin gel layers. The gelatin gel used to form the first and second layer may be independently selected from a hydrolysed gelatin gel or a non-hydrolysed gelatin gel.

The solid support and cells are as defined above.

This two layer configuration has never previously been successfully used to preserve cells hypothermically. Indeed the only case where it has been tried (Stevanovich et al., Cryobiology, 32. 389-403, 1995), it leads to rapid membrane blebbing and cell death.

The two layer configuration of the present invention has a number of advantages. The first is that the two layer configuration enables a uniform cell monolayer to be formed on the lower gelatin layer prior to adding the upper gelatin layer. In contrast, storage in a cell suspension will not be uniform and may cause local high cell densities at the bottom of the container or possibly in the body of the solidifying gelatin. The rapid rate of cell sedimentation suggests that the effect will be most marked near and at the bottom of the container. Cell stacking is likely to also be a problem as the cells sediment. A further advantage relates to diffusion through gelatin gels. It must be remembered that metabolism is continuing under hypothermic conditions i.e. the cells are not in suspended animation. Energy is still required for maintenance purposes (e.g. ion pumps and protein degradation). The two layer configuration allows diffusion across the entire cell surface unlike when the cells are either on the top of the surface of the gelatin gel or are attached to a solid support and then covered with the gelatin gel.

Furthermore, the depth of the gelatin gels above the cells is generally less than that when the cells are immobilised on a solid support and covered with the gel, again allowing better diffusion of nutrients to the cells.

Furthermore, by preserving cells between two layers, the cells will have uniform forces over their entire surface area. The cells will therefore distort less and are less likely to undergo phenotypic changes. Furthermore, the inventors have found that cells survive longer in a non-hydrolysed gelatin gel two layer configuration than when cells attached to a solid support are covered with a non-hydrolysed gelatin gel layer or when cells are immobilised within a non-hydrolysed gelatin gel.

Accordingly, there are numerous advantages associated with the two layer configuration for immobilising cells.

As indicated previously, it is desirable, although not necessary, to have the gelatin layers covered with a liquid culture medium. This is particularly preferred when the duration of preservation is over a long period of time.

The inventors of the present invention have also found that following long-term storage of cells at temperatures of between 0 and 15°C, organelles such a mitochondria aggregate to the centre of the cells (Griffiths et al., Cryobiology, 40, 176-181, 2000). This is due to the collapse of the cytoskeleton in the cell. It has been found that subjecting the cells to brief periods at temperatures or between 20 and 37°C, is sufficient to restore cytoskeleton structures while being too short to initiate phenotypic changes in the cells.

Preferably, the methods of the present invention additionally comprise subjecting the cells to temperatures of between about 20 and 37°C for about 1 to 16 hours (preferably about 5 hours) at least once every few days (i.e. about every 2 to 5 days). However, if the increased temperature results in the gelatin gel melting (e.g. when a hydrolysed gelatin gel is subjected to a temperature of about 25°C or when a non-hydrolysed gelatin gel is subjected to a temperature of about 37°C) it is preferred, that the cells are transferred to a suspension culture for the duration of the increased temperature and then attached to a gelatin containing gel for continued preservation. Suspension cultures are well known to those skilled in the art. In particular, a suspension culture for hepatocytes is described in Evans, Biochim. Biophys. Acta., 677. 433-444, 1981.

The present invention also provides a method of preserving isolated cells comprising attaching the cells to a gel comprising non-hydrolysed gelatin and/or hydrolysed gelatin and culturing the cells at a temperature of between 0 and 15° C, and further comprising subjecting the cells to temperatures of between about 20 and 37°C for about 1 to 16 hours (preferably about 5 hours) at least once every few days (i.e. about every 2 to 5 days). The cells may be attached to a surface of the gel, held between two layers of the gel, immobilised within the gel or attached to a solid support and covered with the gel.

The methods of the present invention enable "cell banks" of primary cells to be made from one animal. The cells can subsequently be used over a period of days, avoiding the complications of genetic variation. The methods enable cells to be used immediately without waiting for the cells to multiply. The methods enable the preservation of cell types which are sensitive to cryopreservation and allows genetically modified cells to be transported to distant locations with minimal losses.

The present invention also provides a method for preserving isolated organs or fragments of tissue comprising perfusing the organ or tissue with a liquefied gel comprising hydrolysed and/or non-hydrolysed gelatin, wherein subsequent to perfusion, the organ or tissue is stored at a temperature of between 0 and 15°C.

A major difficulty with organ transplantation is the short time period available before the organ deteriorates (e.g. 36-48h for a liver). Many argue that this is not initially due to the poor preservation of the organ specific cells but the greater sensitivity of the endothelial cells lining the blood vessels (T.Ebert *et al.,* Modem Trends in BioThermoKinetics, 3 288-293, 1994). These cells "slough off' the walls, when reperfusion is attempted, leading to occlusion of the blood vessels and subsequent organ damage due to impaired circulation. Perfusion of a freshly isolated organ with a gelatin preservation medium prevents these changes. Following complete perfusion, the organ is stored at between 0 and 15°C with the result that the gelatin solidifies within the blood vessels etc. and the endothelial cells are held in their correct positions. The gelatin gel combines the features of a solid supporting matrix, a good diffusion rate with the tissues and a low melting temperature. When the organ is required is can be perfused with a medium (e.g. saline) at 37°C. The preserving gelatin gel is washed out rapidly. The use of the gelatin has a further benefit that gelatin is a normal body material and is unlikely to be immunogenic.

The organ can be any organ such as a heart, liver, kidney etc. The tissue can be any tissue having vasulature capable of being perfused. Preferably, an organ is perfused and then tissue samples taken from the perfused organ. Alternatively, a tissue sample can be perfused directly provided it has sufficient vasculature to allow, perfusion.

The liquefied gel is a gelatin gel which is liquefied by maintaining it at a sufficiently high temperature (e.g. 25 to 37 °C) to ensure that it does not solidify. Preferably the gelatin gel comprises hydrolysed gelatin or non-hydrolysed gelatin and is as defined above. Most preferably, the gelatin gel comprises hydrolysed gelatin as defined above.

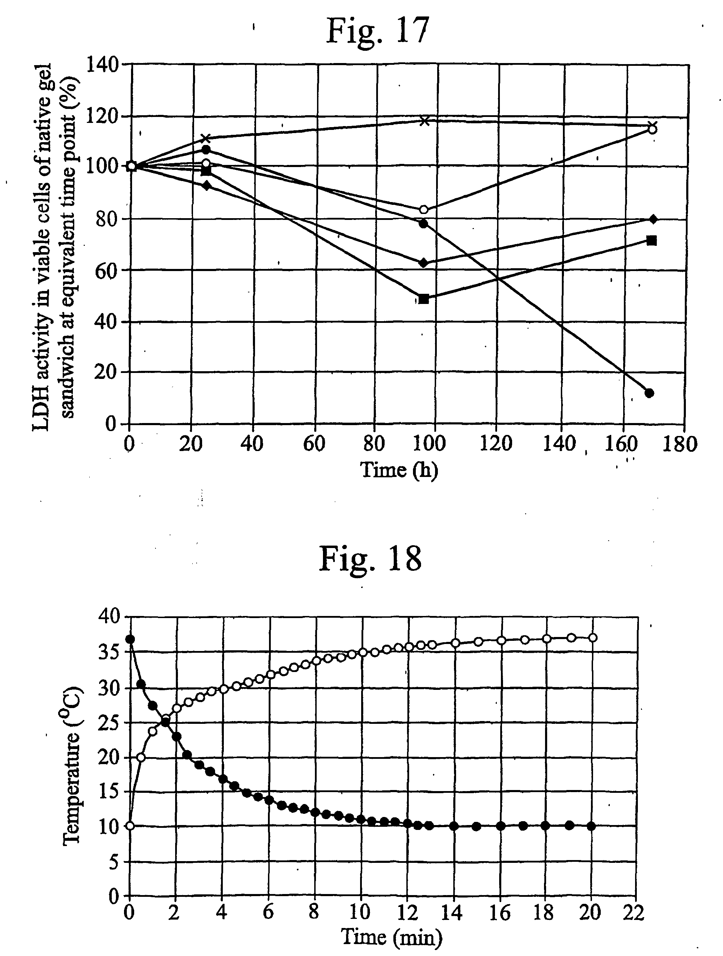

The present invention will now be described by way of examples with reference to the following:
Figure 1 shows schematically cells preserved on a layer of gel comprising hydrolysed gelatin.
Figure 2 shows schematically cells preserved between two layers of gel comprising hydrolysed gelatin.
Figure 3 shows schematically cells preserved within a layer of gel comprising hydrolysed gelatin.
Figure 4 shows schematically cells immobilised on a solid support and covered with a layer of gel comprising hydrolysed gelatin.
Figure 5 shows the recovery of rat hepatocytes after hypothermic preservation at 10°C. The values refer to the enzyme activity subsequently found in cells which adhered after 2 hours.
Figure 6 shows the effect of hypothermic preservation on the rates of protein synthesis.
Figure 7 shows the activity of tyrosine aminotransferase, ± hormonal additions, following preservation. (■) basal culture medium, (□) basal culture medium with dexamethasone and dibutyryl cAMP.
Figure 8 shows γ-Glutamyl transpeptidase activity during hepatocyte culture. Hepatocytes were preserved continuously (•) or, following 96h of preservation, re-cultured at 37°C (O). The γ-GT induction profile is identical to that where freshly isolated hepatocytes are cultured without prior-preservation.
Figure 9a shows the effect of culture (37°C) on hepatocyte levels of cytochrome P₄₅₀ and cytochrome b5 and figure 9b shows the effect of preservation on hepatocyte levels of cytochrome P₄₅₀ and cytochrome b5.
Figure 10 shows the maintenance of cytochrome P₄₅₀ 1A1 in preserved hepatocytes.
Figure 11a shows the intracellular protein degradation in hepatocytes cultured at 37°C and figure 11b shows the intracellular protein degradation in preserved hepatocytes. Trichloroacetic acid-insoluble radioactivity (■) and trichloroacetic acid-soluble radioactivity (□).
Figure 12 shows the morphology of hepatocytes *in vitro.* Freshly isolated cells (a) possess a rounded shape. In conventional culture the hepatocytes rapidly spread to the extent that, within 24h, the nucleus becomes distorted and the cell is very flat (b). Using the preservation gelatin gel and under hypothermia, the rounded morphology is retained (c), approximating to the situation *in vivo.* The cells retain this shape throughout preservation.
Figure 13 shows cell viability during preservation in the absence of serum (■), nutrients **(•)** or hormones (□).
Figure 14 shows the TCA soluble content of native, thermally hydrolysed native and 75 bloom gelatin. The gelatin solutions were heated at 37°C and 40°C (•), 50°C (▲), 60°C (◆), 70°C (□), 80°C (■) and 95°C (×) for the period shown. The TCA soluble protein content of autoclaved native (- - -) (upper line) and 75 bloom gelatin (- - -) (lower line) are also shown.
Figure 15 shows the hepatocyte attachment to Primaria® plates at 37°C after 2h following release from preservation gel containing non-hydrolysed or hydrolysed gelatin. The first column shows cells which were released by heating (37°C) and given 2h to attach. The second column shows the viability of cells which were recovered from the hydrolysed preservation gel by adding excess amounts of L-15 medium at 10°C and then separated from the suspension by centrifugation/pelleting. Serum was either present (+ve serum) or omitted (-ve Serum) from the gel.
Figure 16 shows SDS-PAGE of native gelatin (a); 80°C (2.5h) heat treated gelatin (b); 95°C (2.5h) heat treated gelatin (c); and autoclaved native gelatin (d)
   Gel a: (i) MW: 95KDa
   Gel b: (i) MW: 95KDa; (ii) MW: 30KDa
   Gel c: (i) MW: 30KDa
   Gel d: (i) MW: 30KDa
Figure 17 shows the viability of hepatocytes preserved in different configurations (relative to the gel) and/or in gels composed of either non-hydrolysed or hydrolysed gelatin. Data is expressed as a percentage of the number of viable cells (as determined by LDH activity) in the non-hydrolysed gelatin sandwich at each time point. Native Gel/cell slurry (-◆-) wherein hepatocytes suspended in a gel of non-hydrolysed gelatin; Pre-adhered hepatocytes with Native gel blanket **(-■-)** wherein hepatocytes allowed to adhere to the substratum before being blanketed by gel of non-hydrolysed gelatin; hydrolysed gelatin slurry (-x-) wherein hepatocytes suspended in a gel of non-hydrolysed gelatin hydrolysed at 95°C; 75 bloom slurry **(-•-)** wherein hepatocytes suspended in a gel composed of 75, bloom gelatin (commercially available from Sigma); Pre-attached hepatocytes with Hydrolysed gel blanket (-O-) wherein hepatocytes allowed to adhere to the substratum before being blanketed by a gel of hydrolysed gelatin.
Figure 18 shows the heating and cooling profile of a preservation gel containing non-hydrolysed gelatin within a 60mm Corning plate.
Figure 19a shows the temperature profile within different wells of a 96-well microplate during the cooling stage (10°C). See figure 19b for the relative position of each well.

### Example 1

### Materials & Method

Collegenase was purchased from Boehringer Mannheim, Opti Phase X from LKB, Croydon, Surrey, U.K. *Leibovitz* (L-15) culture medium, new born calf serum and gentamycin were supplied by ICN by Biomedicals LTD, High Wycombe, Bucks U.K. and insulin was obtained from Boots, Nottingham, UK. All other chemicals were obtained from Sigma, Poole, Dorset, UK.

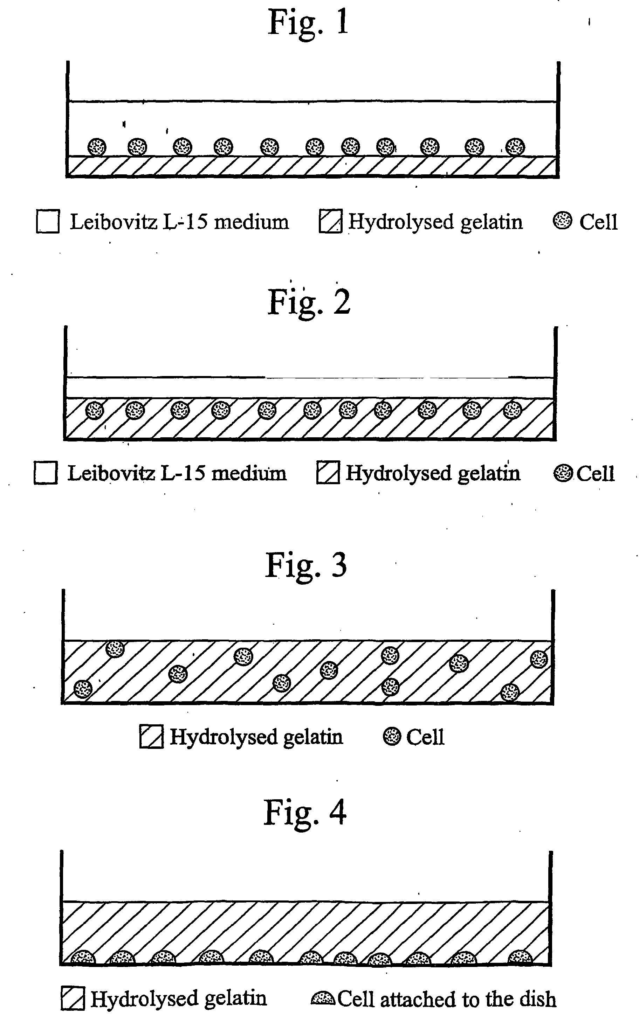

Hepatocytes were prepared as described previously (Evans 1981 *(supra),* Evans and Mayer, 1982 *(supra)).* The gel of the present invention comprises cell culture medium consisting *of Leibovitz* (L-15) medium (pH7.4) containing glucose (8.3mM) and Hepes (25mM), and hydrolysed gelatin. Hydrolysed gelatin was obtained by heating gelatin (3%, Sigma type I from porcine skin) in sterile water to 95°C for 2 hours. One volume of the 3% hydrolysed gelatin solution was added to 1 volume of a 2 x solution of the cell culture medium to form a solution containing 1.5% (w/v) hydrolysed gelatin. The gel containing the hydrolysed gelatin was allowed to cool to 10°C in a 60 mm culture dish. 2.5 x 10⁶ hepatocytes were added in 3 mls of *Leibovitz* (L-15) medium (pH7.4) supplemented with glucose (8.3mM), Hepes (25mM), insulin (0.8µg ml⁻¹), gentamicin (50 µg/ml⁻¹) and heat inactivated new born calf serum (10% v/v). One hour was allowed for attachment of the cells to the gel at 10°C. The cells attached firmly to the gel but were not able to spread or migrate across the substratum. The plates were placed in a humidified 10°C incubator. Figure 1 shows schematically the hepatocytes attached to the gel layer.

The plates were sampled at daily intervals and found to maintain high viability as judged by their retention of the cytosolic marker enzyme lactate dehydrogenate (LDH) and their subsequent ability to attach to a solid support. The cells were also found to maintain their rates of protein synthesis and to show *in vivo* like responses to hormones. The levels of cytochrome P₄₅₀ and its specific isoenzymes were found to be maintained. Furthermore, atypical enzyme characteristics of phenotypic changes did not appear.

The preserved hepatocytes maintained the above mentioned properties for at least seven days.

The hepatocytes were detached from the gel by addition of excess cold culture medium with rimming.

The hepatocytes detached from the gel were harvested and could be used in assays and other experiments.

### Example 2

The experiment described in Example 1 was repeated except that after attachment of the hepatocytes to the gel layer, the culture medium was removed and replaced with 1 ml of the L-15 cell culture medium comprising hydrolysed gelatin, 1.5% (w/v). The upper gel layer was allowed to attach to the lower layer of gel for 1 hour at room temperature. The gel layers and cells where then placed at 10°C to allow the gel to solidify. A further 1 ml of cell culture medium was added to the top of the upper gel layer. See Figure 2.

The preserved hepatocytes were found to be preserved in an identical manner to the hepatocytes of Example 1.

Again the cells were detached from the gel by addition of excess cold culture medium (with rimming).

### Example 3

The L-15 medium comprising 1.5% hydrolysed gelatin as described in example 1 above is melted at 37°C and hepatocytes are added. The gel containing the hepatocytes is then placed at 10°C so that the gel solidifies and the hepatocytes are immobilised within the gel (see Figure 3).

The preserved hepatocytes were found to be preserved in an identical manner to the hepatocytes of Example 1.

Again the cells were detached from the gel by addition of excess cold culture medium with rimming.

### Example 4

Hepatocytes are cultured in a petri dish in the L-15 medium described in example 1, which does not comprise 1.5% hydrolysed gelatin, at 37°C for 2 hours. The hepatocytes attach to the surface of the dish. The L-15 medium is removed and replaced by the L- 15 medium comprising 1.5% hydrolysed gelatin described in example 1. The dish is placed at 10°C and the gel solidifies covering the cells attached to the surface of the dish. See Figure 4.

The preserved hepatocytes were found to be preserved in an identical manner to the hepatocytes of Example 1.

The gel was removed by heating or by the addition of excess cold culture medium with rimming and the cells remained attached to the surface of the dish ready for use in assays or other experiments.

As will be apparent to one skilled in the art, the amount of gelatin, solid support to which the cells can attach and the type of culture medium used to form the gel can vary depending on the exact requirements of the study. Examples 2 to 4 have also been performed using non-hydrolysed gelatin in place of hydrolysed gelatin and the cells detached from the gel by heating the gel to 37°C.

### Example 5

### Measurement of functional integrity of preserved cells

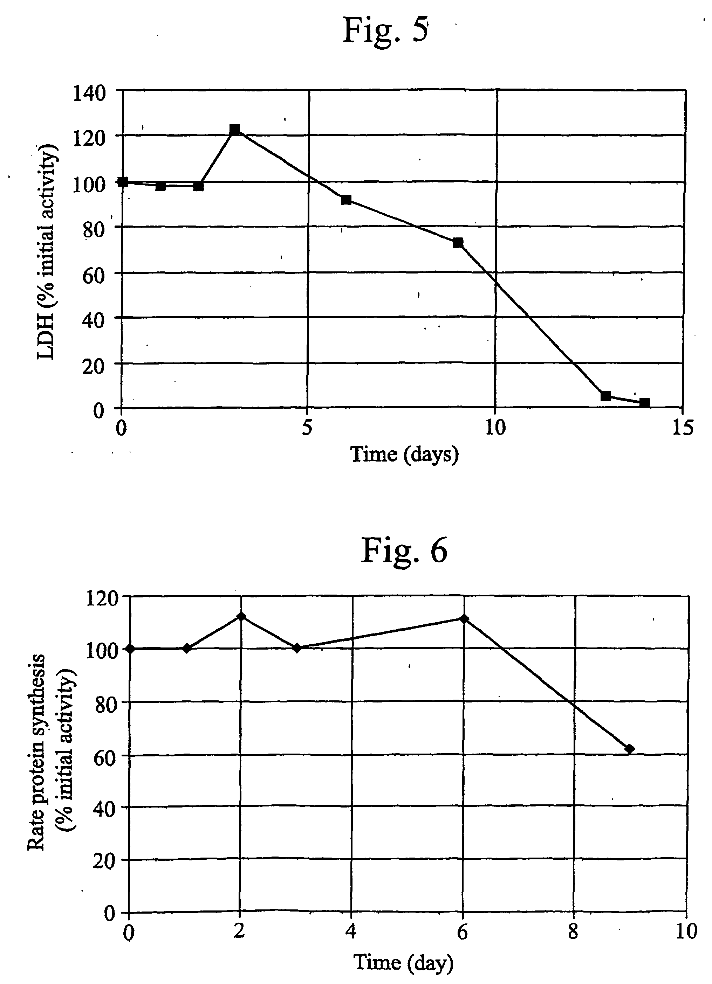

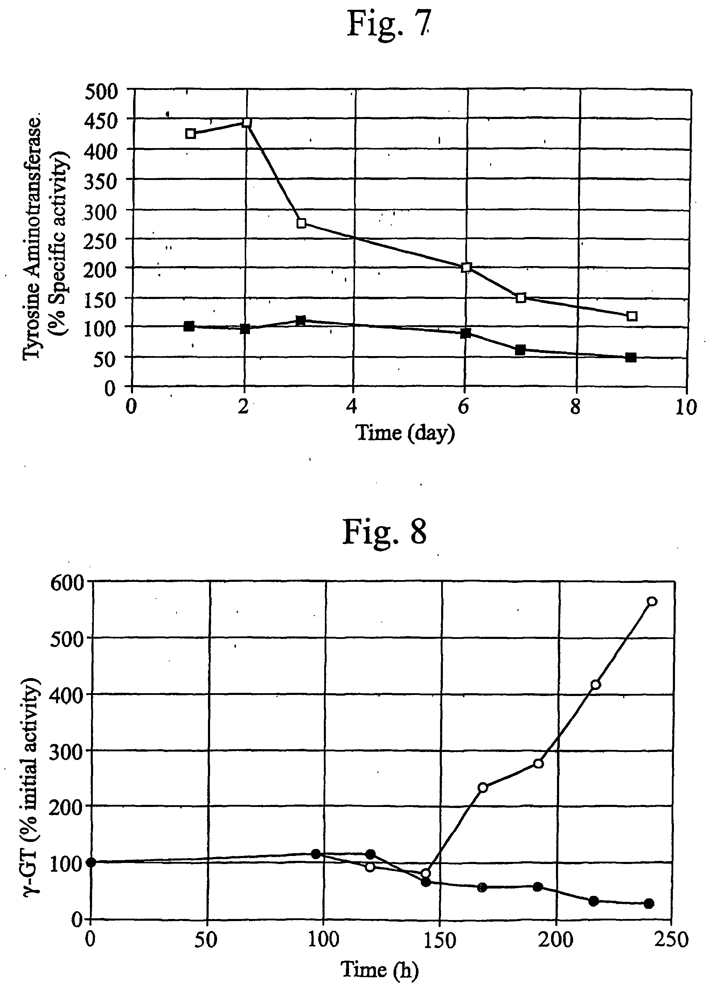

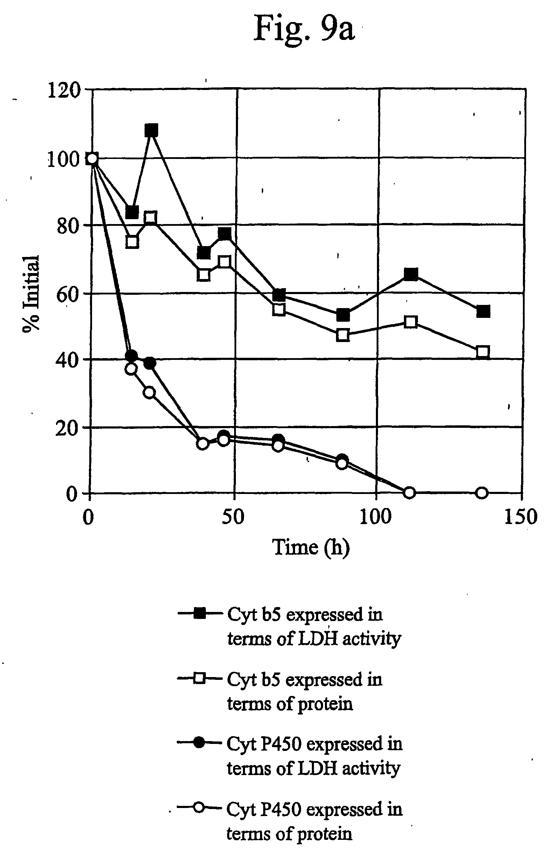

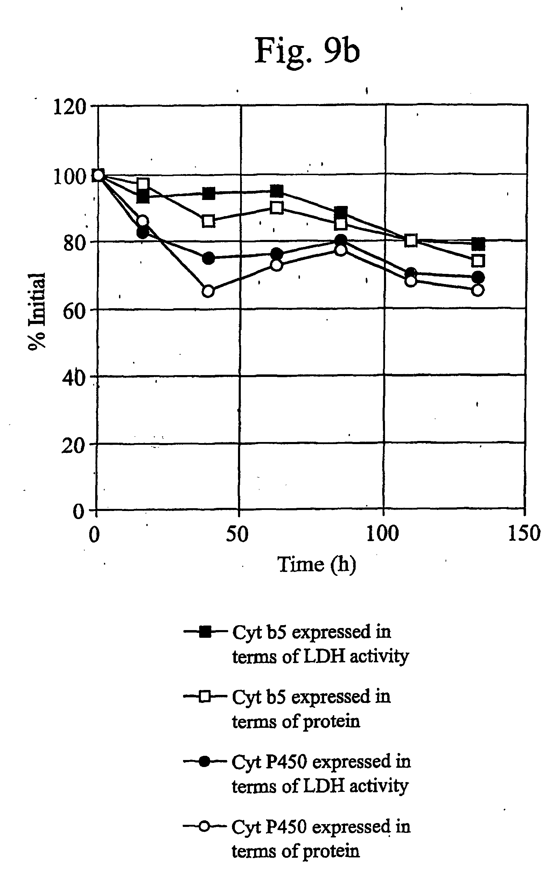

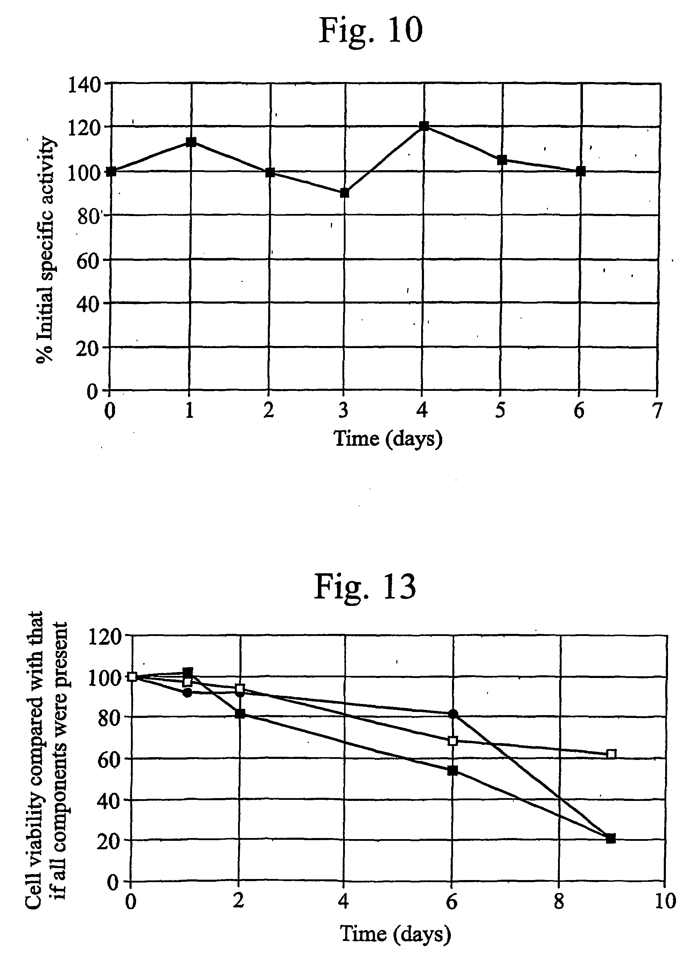

The functional integrity of preserved cells was examined using the following criteria:-
1. Over a 7 day period 90 -95% of the cells released from the gelatin gels (both non-hydrolysed gelatin and hydrolysed gelatin gels) excluded the dye trypan blue. This figure is essentially the same as the viability of the freshly isolated cells.
2. Exclusion of vital dyes or retention of soluble enzymes indicates that the cells are alive at that instant. However, sustained viability is not necessarily indicated by these techniques. Poullain *et al.* (Hepatology **15**, 97-106, 1992) reported that the lactate dehydrogenase activity after cold storage in the University of Wisconsin solution is relatively high even though the cells were unable to attach to plastic and survive. Similarly cryopreserved cells also often show these "contradictory" properties. Due to this uncertainty, cells preserved using the gelatin gels of the present invention were screened for their ability to attach to supports over a period of 2 hours at 37°C and to express biochemical markers lactate dehydrogenase (LDH). The preserved cells were found to attach to supports in an identical manner to freshly isolated (non-preserved) cells. See Figure 5.
3. Attachment to a support is not conclusive proof that the hepatocytes will subsequently maintain their function at 37°C. Moreover, the cells may require a recovery period and have deteriorated metabolic function, as has been observed for cryopreserved cells, (De Loecker *et al* Cryobiology **30**,12-18, 1993; Chesne *et al.* Hepatology **18**, 406-414, 1993). Accordingly, the rates of protein synthesis were used as a criterion of normal behaviour. Protein synthesis requires a high degree of metabolic integration. Typical responses given by the cells following preservation in the gelatin gels of the present invention are shown in Figure 6. Rates of protein synthesis were measured by the incorporation of L- [4,5 -³H] leucine into a trichloroacetic acid insoluble form. The rates were linear for at least 7 hours and were not preceded by a lag phase.
4. Protein synthesis measurements show a general cell function but do not indicate whether the latter is tissue specific. Following preservation using the gelatin gels of the present invention, cells were tested for their hormonal induction of the enzyme tyrosine aminotransferase. This is a liver specific property. It involves hormone receptor binding, occupied receptor translocation, transcription and translation. Typical results are shown in Figure 7, wherein the preserved cells cultured in the presence of the inducers dexamethasone and dibutyryl cAMP have increased levels of tyrosine aminotransferase whereas the preserved cells in the absence of the inducers (basal culture medium) do not have increased levels. Of particular interest is that the induced preserved cells maintain *in vivo* like enzyme levels as opposed to non-preserved cells cultured in *vitro* at 37°C.
5. In addition to maintaining liver specific functions, if the preserved cells are to approximate to the freshly isolated cells, they should not undergo phenotypic changes during preservation. The appearance of the enzyme gamma glutamyl transpeptidase is an early marker of liver cancer and is induced when hepatocytes are cultured at 37°C (Edwards, Cancer Res., **42**, 1107-1115, 1982). Figure 8 shows that the phenotypic marker does not rise during preservation but clearly does after 48h of culture at 37°C. It is interesting that following preservation, the culture of the cells results in the induction of γ-Glutamyl transpeptidase over the same time period as for freshly isolated cells. This shows that their function has been maintained by preservation but that the cells eventually behave in the same manner as freshly isolated cells when subsequently cultured at 37°C.
6. Clearly "long term" phenotypic changes (such as the induction of γ-Glutamyl transpeptidase) are prevented. However, phenotypic changes occur at different rates. It was possible that rapid changes would still occur in the preservation systems. Possibly the earliest phenotypic change is the fall in cytochrome P₄₅₀ which ultimately reduces the value of long-term cultures of hepatocytes in toxicity testing. The effect of various forms of culture on the levels of cytochrome P₄₅₀ and the more stable cytochrome b₅ were compared. As expected conventional culture led to a rapid decline in the level of cytochrome P₄₅₀ (figure 9a). However, the preservation models retained high levels of cytochrome P₄₅₀ almost equivalent to those of cytochrome b₅ (figure 9b).
7. As a further test of relevance to the *in vivo* situation, the isoenzyme profile of cytochrome P₄₅₀ should not be changed by the preservation procedure. Figure 10 illustrates the maintenance of the specific cytochrome P₄₅₀ isoenzyme 1A1 by the preservation procedures.

### Example 6

### Metabolism continues under preservation conditions

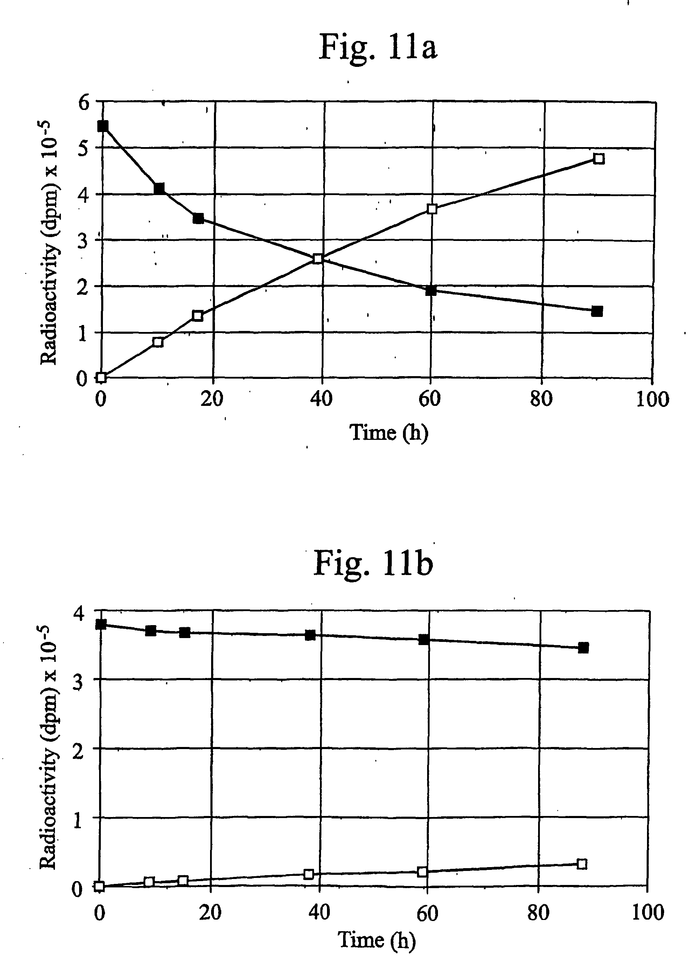

Unlike cryopreservation, the cells are not in a state of suspended animation during preservation in the gelatin gels of the present invention. Some metabolism continues, although at a very low rate. To demonstrate that this was the case, a process, which could be monitored over a long time, was required. Protein synthesis measurements can only be measured over a relatively short time period due to the exhaustion on the labelling radioisotope and/or the turnover of newly synthesised proteins. However, protein degradation measurements, in the presence of the elevated levels of the unlabelled substance originally incorporated into the protein (to prevent reutilisation) can be made over an extended time. Measurements can be made both in terms of the loss of trichloroacetic acid insoluble material in the cells and the appearance of trichloroacetic acid soluble material in the medium. Figure 11a and Figure 11b show the rates of protein degradation of identical ''long lived" proteins at 37°C in normal culture and in the preservation system. The preserved cells were harvested directly from the preservation matrix rather than by letting them attach to the dish for 2 hours. This was carried out by heating the gel to 37° C for 20 minutes (non-hydrolysed) or by aqueous dispersion (hydrolysed). The resulting cell suspensions were centrifuged and the cell pellets and supernatants analysed separately for their radioactive content.

Preservation using the gelatin gels of the present invention increased the half life of the proteins by 20 fold. Under both conditions the radioactivity released from the trichloroacetic acid insoluble forms could be accounted for completely by the radioactivity recovered in the trichloroacetic acid soluble fraction. Cell death was therefore minimal under both sets of conditions. This was verified by total protein measurements, which showed that the cells were in a steady state of protein metabolism at 37°C with only a marginal decrease in protein content during preservation. Protein degradation is an energy dependent process. During preservation the rate of protein degradation remains unchanged showing that detrimental effects do not occur over the measured time span.

### Example 7

### Cell morphology is maintained

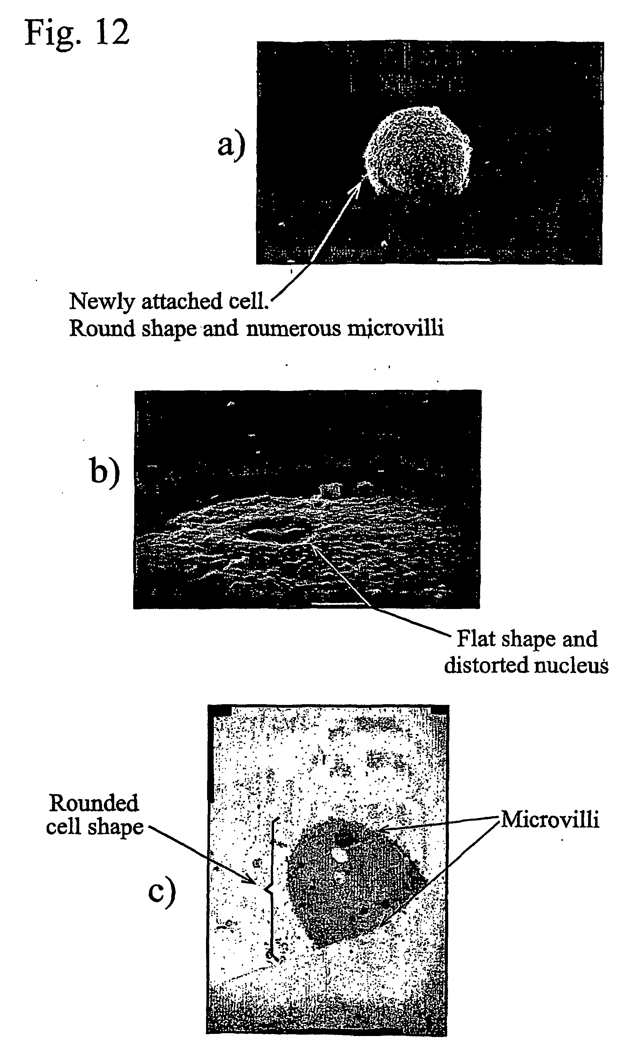

Cell morphology is intrinsically linked to cell function. The inventors have performed studies which have demonstrated that changes to phenotype during culture at 37°C are associated with changes to cell shape. Many other studies have also noted the importance of maintaining the *in vivo* cell shape if cell function is to be retained. See Figure 12 which shows that cells cultured using the gelatin gel of the present invention maintain the rounded morphology.

### Example 8

### Cell viability during preservation in the absence of serum, nutrients or hormones

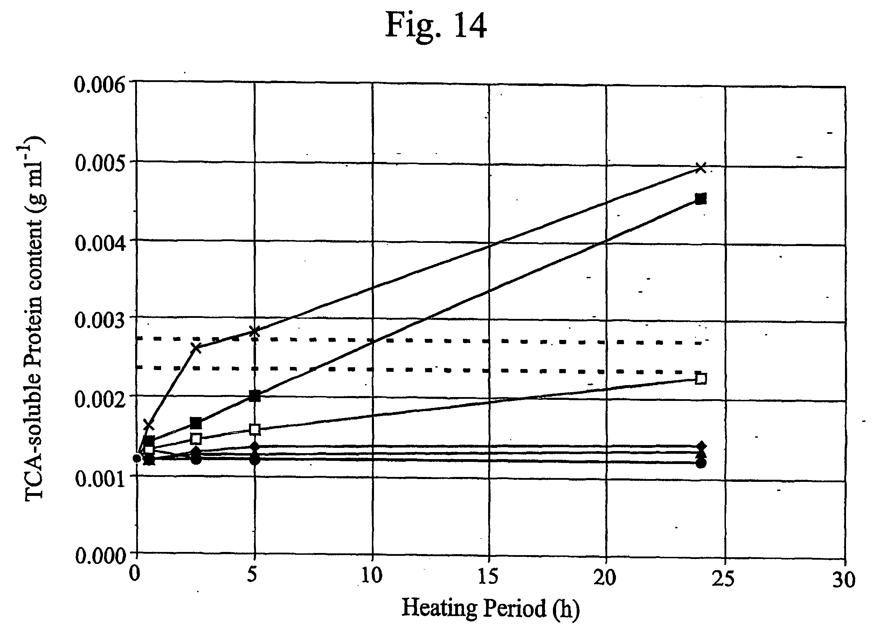

For research purposes, it may be desirable to exposed cells to factors in order to study their effect on cell function e.g. cells are exposed to hormones to study induction profiles. If the cells are exposed prior to the study then the effect of the test agent could be invalid. With this in mind the effect of the various gelatin gel components, upon its preserving potential was performed with the potential aim of simplifying its make-up. Figure 13 shows the effect upon cell viability of omitting one of the three key components: Serum, Nutrients or Hormones. Cell viability is compared to cell viability, at the relevant time point, if the gelatin gel contained the complete complement of components.

This study reveals the stability of the system, allowing a gel with a very defined composition to be developed.

### Example 9

### Preserving primary kidney proximal tubule cells

Hepatocytes have many advantageous properties but at least one glaring difference from many cells in culture. *In vitro*, hepatocytes have a poor growth potential and the initially isolated cells cannot be maintained by subculturing. To assess the effect of the preservation systems on growing cells primary kidney proximal tubule cells have been prepared. The results show that the proximal tubule cells can be preserved using the gelatin gels of the present invention by using the same procedures. Marker enzymes of this cell type, such as alkaline phosphates and γ-Glutamyl transpeptidase are maintained at the level of the freshly isolated preparation for at least a week. The cells are maintained in preservation medium lacking bicarbonate. The viability of the isolated cells is show by trypan blue exclusion. Tubule viability is demonstrated by placing them in a hypotonic medium. Initially bleb formation is seen at the ends of the tubules but later occur along their length. Following the occurrence of blebs, the cells in the tubules begin to take up trypan blue. The preserved proximal tubule preparation shows one difference to that of hepatocytes. The proximal tubule cells will not attach to a support unless the gelatin is removed by washing the cells. Following cell attachment, at 37°C, the cells grow normally in bicarbonate-supplemented medium to form a confluent monolayer at the same rate as freshly isolated proximal tubule cells. The preservation procedures have no detrimental effects on cell growth. Data not shown.

### Example 10

### Physiocomechanical nature of the gelatin containing gels

The physicomechanical nature of the hydrolysed gelatin gel differs from that of the non-hydrolysed gelatin gel. The hydrolysed gelatin gel melts at a temperature lower than that of the non-hydrolysed gelatin gel. In addition the hydrolysed gelatin gel can be dispersed through the addition of an excess of aqueous medium (eg. cell culture medium). The non-hydrolysed gelatin gel can only be dispersed using a heating step.

The hydrolysed gelatin gel is formed by the thermal treatment, under controlled conditions, of native gelatin. Changes to the molecular nature of the resulting gelatin is revealed by changes in the gelatin's resistance to precipitation by TCA (figure 14).

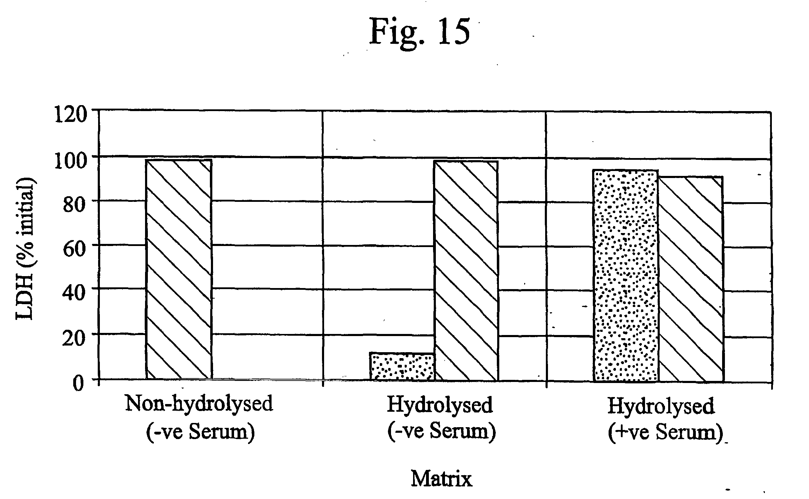

Through experimentation it was found that hydrolysed gelatin inhibits hepatocyte attachment to synthetic cell culture substrata (in this case Primaria®). Figure 15 reveals that the level of inhibition is near 100%. Aqueous harvest (i.e. recovering the cells using aqueous media to dissipate the gel) and dye exclusion tests revealed that the cells are viable (please note that aqueous harvest is not possible for the non-hydrolysed gelatin gels). The inhibition is lost if cells are cultured in the presence of serum. Also attachment inhibited cells were quickly able to attach if re-cultured in complete, serum containing media.

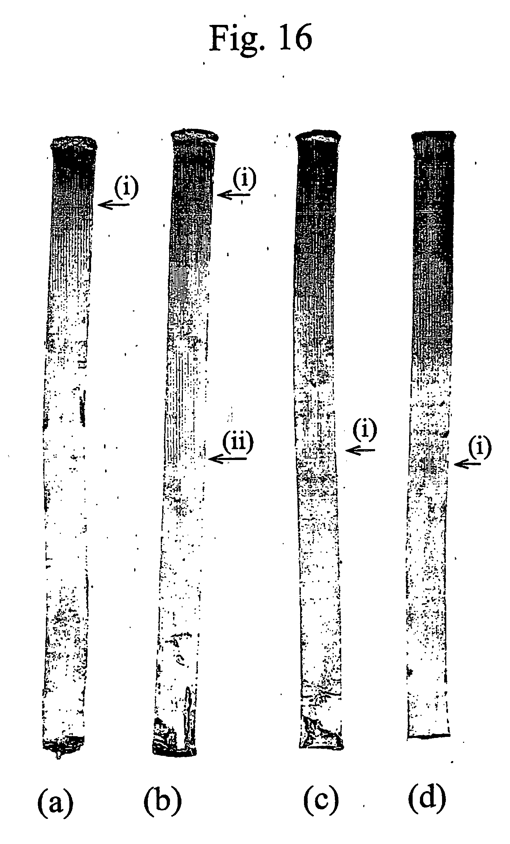

SDS-PAGE analysis of gelatin, hydrolysed by varying degrees (see figure 16), allowed a more detailed study of its composition. The distribution of the gelatin polypeptides are seen to change, broadening and, in agreement with the TCA studies, fragmenting so that there is an increasing frequency of polypeptides with smaller molecular weights (MWs). Moreover the predominant MWs have also changed, from a larger 95KDa fragment in non-hydrolysed gelatin to a smaller 30KDa fragment in the hydrolysed equivalent.

These smaller polypeptides may account for the weaker gel, making it melt at a lower temperature. It also accounts for the susceptibility of the gel to dispersion by aqueous media. However more importantly it may also explain why a gel employing hydrolysed gelatin is superior for retaining cell viability and function to that of a preservation gel containing non-hydrolysed gelatin.

### Example 11

### Viability of hepatocytes preserved in different configurations

Hepatocytes have been preserved using preserving gelatin gels not only of varying compositions (see example 8) but also of differing configurations (i.e. relationship between the cells and the preserving gelatin gel) as shown in Figure 17.

The commercially avilable 75-bloom gelatin cannot be used for the preservation of hepatocytes since it is cytotoxic and causes great morphological abnormalities.

The use of autoclaved gelatin to preserve the cells provided identical results to that of preservation in 95°C (2h) treated gelatin.

A conclusion from Figure 17 is that a non-hydrolysed gelatin sandwich is superior in the preservation of cells to either a non-hydrolysed slurry or a non-hydrolysed gelatin overlay. This may either be due to the ability to create a uniform monolayer (avoiding cell stacking) or its improved diffusion properties. The limitation apparent in the non-hydrolysed slurry or overlay are not present in their hydrolysed counterparts. Although both forms of hydrolysed gel have similar properties only the gelatin heat treated at 95°C (2h) will form a gel which is sufficiently stable to support a cell monolayer. The autoclaved gelatin gel is dissipated too readily by aqueous medium. The advantage of the 95°C support is that it can allow the culture medium to be changed during preservation (potentially adding fresh cell stabilizers). This allows the cause of hypothermic injury in long term preservation to be studied.

There is a progressive weakening of gel strength seen in out thermal treatments. The non-hydrolysed and 80°C treated gelatin gel both require a heating step to release cells. In contrast both the 95°C treated gel and autoclaved gelatin can be dissipated by aqueous medium or heating. In the same way that the 80°C treated gelatin requires a shorter heating step than the non-hydrolysed gelatin to solubilise, the autoclaved gelatin gel is more readily dispersed by aqueous solutions while the 95°C gel (2h) is more robust and requires rimming prior to dispersion in aqueous medium.

### Example 12

### Rate of heating and cooling a gelatin gel

Figure 18 shows the rate of heating/cooling of non-hydrolysed gelatin gels from 10°C - 37°C and vice versa. The experiment was performed by placing a thermocouple at the periphery of a 60mm plate containing non-hydrolysed gelatin. It is apparent that the temperature transition takes at least 14 minutes to occur. This is much shorter than the time allowed for plating (2h). It is likely that there is a temperature gradient across the plate and that this would have a substantial effect on the distribution of the cells prior to gelatin solidifying.

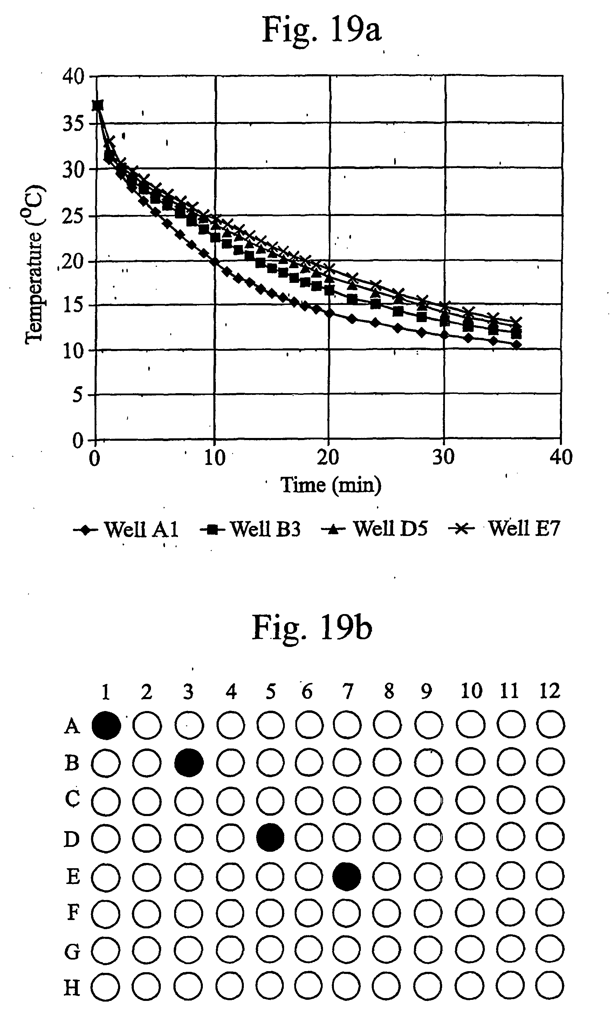

To prove that such a temperature gradient does exist a 96-well microplate was used. Non-hydrolysed gelatin was added to each of the wells and the thermocouple could now be located precisely in an individual well. Figures 19a and 19b show the cooling rate of gelatin in the different wells. It is clear that the central wells cool less rapidly than the outer wells and this temperature gradient would mean an uneven distribution of cells is caused in a non-hydrolysed gel slurry, leading to stacking effects. The lower melting temperature of hydrolysed gelatin means that the effect of the temperature difference is minimised.

Figure 18 and 19 suggest that the better cell preservation properties of hydrolysed gelatin slurries and overlays, relative to their non-hydrolysed counterparts are due to better diffusion properties and/or the avoidance of cell stacking. To further argue the important effects of diffusion in the preservation of hepatocytes it is noteworthy that when glycerol (0.5M) is included in the system (to investigate its ability to protect the cells as in cryopreservation) it is cytotoxic. It substantially reduces the viability of the cells (10% remaining after 7 days). While we cannot rule out an overt cytotoxic affect of glycerol, its viscous nature would certainly limit diffusion to the cells.

## Claims

1. A method for preserving, isolated cells comprising attaching the cells to a gel comprising hydrolysed gelatin and culturing the cells at a temperature of between 0 and 15°C, wherein the gel is sufficiently weak to be dispersed by addition of an aqueous solution.

2. The method according to claim 1 wherein the gel comprises a cell culture medium and hydrolysed gelatin.

3. The method according to any one of the previous claims, wherein the cells are cultured at a temperature of between 4 and 14°C.

4. The method according to any one of claims 1 to 3, wherein the cells are cultured at a temperature of about 10°C.

5. The method of any one of the previous claims wherein the hydrolysed gelatin is produced by thermal hydrolysis of gelatin.

6. The method of claim 5, wherein the hydrolysed gelatin is produced by heating gelatin to a temperature of 85 to 121°C for between 0.3 and 3 hours.

7. The method of claim 5, wherein the hydrolysed gelatin is produced by heating gelatin to a temperature of about 95°C for about 2 hours.

8. The method of any one of the previous claims, wherein the gel comprises between 0.5% and 5.0% (w/v) hydrolysed gelatin.

9. The method of any one of claims 1 to 7, wherein the gel comprises between 1 and 2% (w/v) hydrolysed gelatin.

10. The method of any one of claims 1 to 7, wherein the gel comprises about 1.5% (w/v) hydrolysed gelatin.

11. The method according to any one of the previous claims wherein the gel comprises 1.5% (w/v) hydrolysed gelatin in Leibovitz medium comprising glucose and Hepes.

12. The method of any one of the previous claims, wherein the cells are primary cells.

13. The method of any one of claims 1 to 11, wherein the cells are hepatocytes.

14. The method of any one of the previous claims, wherein the cells are attached to the surface of the gel and covered with a liquid culture medium.

15. The method of any one of claims 1 to 13, wherein the cells are attached to the surface of a first layer of the gel and then covered with a second layer of the gel so that the cells are held between the two layers of gel.

16. The method of any one claims 1 to 13, wherein the cells are mixed with the gel before it solidifies resulting in the cells being immobilised in the gel when the gel solidifies.

17. The method of any one of claims 1 to 13, wherein the cells are attached to a solid support and then covered with a layer of the gel.

18. The method of claim 17, wherein the solid support is a culture dish, a well or a column.

19. A gel comprising hydrolysed gelatin for use in the method of any one of the previous claims, wherein the gel is sufficiently weak to be dispersed by addition of an aqueous solution.

20. A gel comprising hydrolysed gelatin and one or more isolated cells, wherein the gel is sufficiently weak to be dispersed by addition of an aqueous solution.

21. A solid support having the gel of claim 19 or claim 20 formed thereon.

22. The solid support of claim 21, which is a culture dish, well or column.

23. The solid support of claim 21 or claim 22, wherein cells are attached to the gel formed on the solid support.

24. A method for preserving isolated cells comprising attaching the cells to the surface of a first layer of a gel and then covered with a second layer of a gel so that the cells are held between the two layers of gel, and culturing the cells at a temperature of between 4 and 14°C wherein at least one of the layers of gel, comprises non-hydrolysed gelatin.

25. The method of claim 24, wherein both layers of gel comprise non-hydrolysed gelatin.

26. The method of claim 24, wherein the first layer of gel comprises hydrolysed gelatin and the second layer comprises non-hydrolysed gelatin.

27. The method of claim 24, wherein the first layer of gel comprises non-hydrolysed gelatin and the second layer comprises hydrolysed gelatin.

28. The method according to any one of the previous claims additionally comprising subjecting the cells to temperatures of between about 20 and 37°C for about 1 to 16 hours at least once every few days

29. The method according to claim 28, wherein the increased temperature results in the gelatin gel melting, additionally comprising transferring the cells to a suspension culture for the duration of the increased temperature and then attached to a gel containing gelatin for continued preservation.

30. A solid support having a first layer of gelatin gel formed thereon, a second layer of gelatin gel formed on the first layer of gelatin gel, and wherein cells are held between the two gelatin gel layers.

31. The solid support of claim 28, wherein gelatin gel layers are independently selected from hydrolysed gelatin gel and non hydrolysed gelatin gel.

32. A method for preserving isolated organs or fragments of tissue comprising perfusing the organ or tissue with a liquefied gel comprising hydrolysed and/or non-hydrolysed gelatin, wherein subsequent to perfusion, the organ or tissue is stored at a temperature of between 0 and 15°C and the liquefied gel solidifies.

## Patentansprüche

1. Verfahren zum Konservieren von isolierten Zellen umfassend das Anhaften der Zellen an ein Gel, umfassend hydrolisierte Gelatine und Kultivieren der Zellen bei einer Temperatur von zwischen 0 und 15°C, wobei das Gel ausreichend schwach ist, um durch die Hinzufügung einer wässerigen Lösung dispergiert zu werden.

2. Verfahren gemäß Anspruch 1, wobei das Gel ein Zellkulturmedium und hydrolisierte Gelatine umfaßt.

3. Verfahren gemäß einem der vorangehenden Ansprüche, wobei die Zellen bei einer Temperatur von zwischen 4 und 14°C kultiviert werden.

4. Verfahren gemäß einem der Ansprüche 1 bis 3, wobei die Zellen bei einer Temperatur von etwa 10°C kultiviert werden.

5. Verfahren gemäß einem der vorangehenden Ansprüche, wobei die hydrolisierte Gelatine durch die thermische Hydrolyse der Gelatine produziert wird.

6. Verfahren gemäß Anspruch 5, wobei die hydrolisierte Gelatine durch das Erhitzen der Gelatine auf eine Temperatur von 85 bis zu 121°C für zwischen 0,3 und 3 Stunden produziert wird.

7. Verfahren gemäß Anspruch 5, wobei die hydrolisierte Gelatine durch das Erhitzen der Gelatine auf eine Temperatur von etwa 95°C für etwa zwei Stunden produziert wird.

8. Verfahren gemäß einem der vorangehenden Ansprüche, wobei das Gel zwischen 0,5% und 5,0% (W/V) hydrolisierte Gelatine umfaßt.

9. Verfahren gemäß einem der Ansprüche 1 bis 7, wobei das Gel zwischen 1 und 2% (W/V) hydrolisierte Gelatine umfaßt.

10. Verfahren gemäß einem der Ansprüche 1 bis 7, wobei das Gel etwa 1,5% (W/V) hydrolisierte Gelatine umfaßt.

11. Verfahren gemäß einem der vorangehenden Ansprüche, wobei das Gel 1,5% (W/V) hydrolisierte Gelatine in Leibovitz-Medium umfassend Glukose und Hepes umfaßt.

12. Verfahren gemäß einem der vorangehenden Ansprüche, wobei die Zellen Primärzellen sind.

13. Verfahren gemäß einem der Ansprüche 1 bis 11, wobei die Zellen Hepatozyten sind.

14. Verfahren gemäß einem der vorangehenden Ansprüche, wobei die Zellen an die Oberfläche des Gels angehaftet sind und mit flüssigem Kulturmedium bedeckt sind.

15. Verfahren gemäß einem der Ansprüche 1 bis 13, wobei die Zellen an die Oberfläche einer ersten Schicht des Gels angehaftet sind und dann mit einer zweiten Schicht des Gels bedeckt sind, so daß die Zellen zwischen zwei Gelschichten gehalten werden.

16. Verfahren gemäß einem der Ansprüche 1 bis 13, wobei die Zellen mit dem Gel vermischt werden, bevor es sich verfestigt, was darin resultiert, daß die Zellen in dem Gel immobilisiert werden, wenn sich das Gel verfestigt.

17. Verfahren gemäß einem der Ansprüche 1 bis 13, wobei die Zellen an eine Feststoffunterstützung angehaftet sind und dann mit einer Schicht des Gels bedeckt werden.

18. Verfahren gemäß Anspruch 17, wobei die Feststoffunterstützung eine Kulturschale, ein Well oder eine Säule ist.

19. Gel umfassend hydrolisierte Gelatine für die Verwendung bei dem Verfahren gemäß einem der vorangehenden Ansprüche, wobei das Gel ausreichend schwach ist, um durch die Hinzufügung einer wässrigen Lösung dispergiert zu werden.

20. Gel umfassend hydrolisierte Gelatine und eine oder mehrere isolierte Zellen, wobei das Gel ausreichend schwach ist, um durch die Hinzufügung von einer wässerigen Lösung dispergiert zu werden.

21. Feststoffunterstützung mit dem Gel gemäß Anspruch 19 oder Anspruch 20, das darauf gebildet ist.

22. Feststoffunterstützung gemäß Anspruch 21, welche eine Kulturschale, ein Well oder eine Säule ist.

23. Feststoffunterstützung gemäß Anspruch 21 oder 22, wobei die Zellen an das Gel angehaftet sind, das auf der Feststoffunterstützung gebildet ist.

24. Verfahren zum Konservieren von isolierten Zellen umfassend das Anhaften der Zellen an die Oberfläche einer ersten Schicht eines Gels und dann das Bedecken mit einer zweiten Schicht eines Gels, so daß die Zellen zwischen den zwei Schichten des Gels gehalten werden, und Kultivieren der Zellen bei einer Temperatur von zwischen 4 und 14°C, wobei wenigstens eine der Gelschichten nicht-hydrolisierte Gelatine umfaßt.

25. Verfahren gemäß Anspruch 24, wobei beide Gelschichten nicht-hydrolisierte Gelatine umfassen.

26. Verfahren gemäß Anspruch 24, wobei die erste Gelschicht hydrolisierte Gelatine umfaßt und die zweite Gelschicht nicht-hydrolisierte Gelatine umfaßt.

27. Verfahren gemäß Anspruch 24, wobei die erste Gelschicht nicht-hydrolisierte Gelatine umfaßt und die zweite Schicht hydrolisierte Gelatine umfaßt.

28. Verfahren gemäß einem der vorangehenden Ansprüche, zusätzlich umfassend das Aussetzen der Zellen gegenüber Temperaturen von zwischen 20 und 37°C für etwa eine bis zu 16 Stunden wenigstens einmal alle paar Tage.

29. Verfahren gemäß Anspruch 28, wobei die erhöhte Temperatur darin resultiert, daß das Gelatinegel schmilzt, zusätzlich umfassend das Übertragen der Zellen an eine Suspensionskultur für die Dauer der erhöhten Temperatur und dann das Anhaften an ein Gel enthaltend Gelatine für die fortgesetzte Konservierung.

30. Feststoffunterstützung mit einer ersten Schicht Gelatinegel, die darauf gebildet ist, einer zweiten Schicht Gelatinegel die auf der ersten Gelatineschicht gebildet ist, und wobei Zellen zwischen den zwei Gelatinegelschichten gehalten werden.

31. Feststoffunterstützung gemäß Anspruch 28, wobei die Gelatinegelschichten unabhängig ausgewählt werden aus hydrolisiertem Gelatinegel und nicht-hydrolisiertem Gelatinegel.

32. Verfahren zum Konservieren von isolierten Organen oder Gewebefragmenten umfassend das Durchschwemmen des Organs oder des Gewebes mit einem verflüssigtem Gel umfassend hydrolisierte und/oder nicht-hydrolisierte Gelatine, wobei anschließend an die Durchschwemmung das Organ oder das Gewebe bei einer Temperatur von zwischen 0 und 15°C gelagert wird und sich das verflüssigte Gel verfestigt.

## Revendications

1. Procédé de conservation de cellules isolées comprenant la fixation de cellules sur un gel comprenant de la gélatine hydrolysée et culture des cellules à une température comprise entre 0 et 15°C,
**caractérisé en ce que**
le gel est suffisamment faible pour être dispersé par addition d'une solution aqueuse.

2. Procédé selon la revendication 1,
**caractérisé en ce que**
le gel comprend un milieu de culture de cellules et de la gélatine hydrolysée.

3. Procédé selon l'une quelconque des revendications précédentes,
**caractérisé en ce que**
les cellules sont cultivées à une température comprise entre 4 et 14°C.

4. Procédé selon l'une quelconque des revendications 1 à 3,
**caractérisé en ce que**
les cellules sont cultivées à une température d'environ 10°C.

5. Procédé selon l'une quelconque des revendications précédentes,
**caractérisé en ce que**
la gélatine hydrolysée est produite par hydrolyse thermique de la gélatine.

6. Procédé selon la revendication 5,
**caractérisé en ce que**
la gélatine hydrolysée est produite par chauffage de la gélatine à une température de 85 à 121°C pendant entre 0,3 et 3 heures.

7. Procédé selon la revendication 5,
**caractérisé en ce que**
la gélatine hydrolysée est produite par chauffage de la gélatine à une température d'environ 95°C pendant environ 2 heures.

8. Procédé selon l'une quelconque des revendications précédentes,
**caractérisé en ce que**
le gel contient entre 0,5 % et 5,0 % (poids/volume) de gélatine hydrolysée.

9. Procédé selon l'une des revendications 1 à 7,
**caractérisé en ce que**
le gel contient entre 1 et 2 % (poids/volume) de gélatine hydrolysée.

10. Procédé selon l'une des revendications 1 à 7,
**caractérisé en ce que**
le gel contient environ 1,5 % (poids/volume) de gélatine hydrolysée.

11. Procédé selon l'une quelconque des revendications précédentes,
**caractérisé en ce que**
le gel contient 1,5 % (poids/volume) de gélatine hydrolysée dans un milieu de Leibovitz contenant du glucose et de l'Hepes.

12. Procédé selon l'une quelconque des revendications précédentes,
**caractérisé en ce que**
les cellules sont des cellules primaires.

13. Procédé selon l'une quelconque des revendications 1 à 11,
**caractérisé en ce que**
les cellules sont des hépatocytes.

14. Procédé selon l'une quelconque des revendications précédentes,
**caractérisé en ce que**
les cellules sont fixées à la surface du gel et recouvertes par un milieu de culture liquide.

15. Procédé selon l'une quelconque des revendications 1 à 13,
**caractérisé en ce que**
les cellules sont fixées à la surface d'une première couche de gel et puis recouvertes d'une seconde couche de gel, de telle sorte que les cellules sont maintenues entre deux couches de gel.

16. Procédé selon l'une quelconque des revendications 1 à 13,
**caractérisé en ce que**
les cellules sont mélangées avec le gel avant qu'il se solidifie, résultant **en ce que** les cellules sont immobilisées dans le gel, quand le gel se solidifie.

17. Procédé selon l'une quelconque des revendications 1 à 13,
**caractérisé en ce que**
les cellules sont fixées sur un support solide et puis recouvertes par une couche de gel.

18. Procédé selon la revendication 17,
**caractérisé en ce que**
le support solide est une boite pour culture, un puits ou une colonne.

19. Gel comprenant de la gélatine hydrolysée pour une utilisation dans le procédé selon l'une quelconque des revendications précédentes,
**caractérisé en ce que**
le gel est suffisamment faible pour être dispersé par addition d'une solution aqueuse.

20. Gel comprenant de la gélatine hydrolysée et une ou plusieurs cellules,
**caractérisé en ce que**
le gel est suffisamment faible pour être dispersé par addition d'une solution aqueuse.

21. Support solide ayant le gel de la revendication 19 ou de la revendication 20 formé sur ce support.

22. Support solide selon la revendication 21, qui est une boite pour culture, un puits ou une colonne.

23. Support solide selon la revendication 21 ou la revendication 22,
**caractérisé en ce que**
les cellules sont fixées sur le gel formé sur le support solide.

24. Procédé de conservation de cellules isolées comprenant la fixation de cellules à la surface d'une première couche d'un gel et puis recouvrement par une seconde couche d'un gel de telle sorte que les cellules soient maintenues entre deux couches de gel, et culture des cellules à une température comprise entre 4 et 14°C,
**caractérisé en ce qu'**
au moins une des couches de gel contienne de la gélatine non hydrolysée.

25. Procédé selon la revendication 24,
**caractérisé en ce que**
les deux couches de gel contiennent de la gélatine non hydrolysée.

26. Procédé selon la revendication 24,
**caractérisé en ce que**
la première couche de gel contient de la gélatine hydrolysée et la deuxième couche contient de la gélatine non hydrolysée.

27. Procédé selon la revendication 24,
**caractérisé en ce que**
la première couche de gel contient de la gélatine non hydrolysée et la deuxième couche contient de la gélatine hydrolysée.

28. Procédé selon l'une quelconque des précédentes revendications, comprenant en plus le fait de soumettre les cellules à des températures comprises entre environ 20 et 37°C pendant environ 1 à 16 heures au moins une fois par jour pendant quelques jours.

29. Procédé selon la revendication 28,
**caractérisé en ce que**
l'augmentation de température a pour résultat la fusion du gel de gélatine, comprenant en plus le transfert des cellules dans une culture en suspension pendant la durée de l'augmentation de température et puis fixation sur un gel contenant de la gélatine pour une conservation que l'on poursuit.

30. Support solide ayant une première couche de gel de gélatine formée sur ce support, et une deuxième couche de gel de gélatine formée sur la première couche de gel de gélatine,
**caractérisé en ce que**
les cellules sont maintenues entre les deux couches de gel de gélatine.

31. Support solide selon la revendication 28,
**caractérisé en ce que**
les couches de gel de gélatine sont choisies de façon indépendante parmi un gel de gélatine hydrolysée ou un gel de gélatine non hydrolysée.

32. Procédé de conservation, d'organes isolés ou de fragments de tissus, comprenant la perfusion de l'organe ou du tissu avec un gel liquéfié contenant de la gélatine hydrolysée et/ou de la gélatine non hydrolysée,
**caractérisé en ce que**
suite à la perfusion, l'organe ou le tissu est stocké à une température comprise entre 0 et 15°C et le gel liquéfié se solidifie.
